(19) Europäisches Patentamt
European Patent Office
Office européen des brevets

(11) **EP 4 601 311 A1**

(12) **EUROPEAN PATENT APPLICATION**

(43) Date of publication:
**13.08.2025 Bulletin 2025/33**

(21) Application number: **25156188.2**

(22) Date of filing: **06.02.2025**

(51) International Patent Classification (IPC):
***H04N 23/69*** (2023.01)      ***H04N 23/695*** (2023.01)

(52) Cooperative Patent Classification (CPC):
**H04N 23/695; H04N 23/69**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.02.2024 JP 2024017434**

(71) Applicant: **CANON KABUSHIKI KAISHA**
**Tokyo 146-8501 (JP)**

(72) Inventors:
• IWATA, Takuya
  **Ohta-ku, Tokyo, 146-8501 (JP)**
• NAITO, Ryosuke
  **Ohta-ku, Tokyo, 146-8501 (JP)**
• KOSUGE, Akira
  **Ohta-ku, Tokyo, 146-8501 (JP)**

(74) Representative: **TBK**
**Bavariaring 4-6**
**80336 München (DE)**

(54) **ARITHMETIC DEVICE, ARITHMETIC METHOD, AND COMPUTER-READABLE STORAGE MEDIUM**

(57)     Arithmetic devices, methods, and storage mediums are provided herein. At least one device calculates a control speed for controlling a posture of an image capturing device so that a detection position of an object detected from an image captured by the image capturing device becomes closer to a target position of the object in the captured image. In a state where a difference between the detection position and the target position is not smaller than a first threshold, the device calculates a first control speed as the control speed of the posture in accordance with the difference, and in a case where the difference becomes smaller than the first threshold and not smaller than a second threshold smaller than the first threshold after the state, the device calculates, as the control speed of the posture, a second control speed higher than the first control speed in accordance with the difference.

**F I G. 1**

**Description**

BACKGROUND OF THE INVENTION

Field of the Disclosure

One or more features of the present disclosure relate to one or more embodiments of arithmetic techniques for tracking and capturing an image.

Description of the Related Art

A technique of detecting, from a captured image, an object to be tracked (to be referred to as a tracking object hereinafter) that is designated by a user, tracking the object, and capturing an image of the object is generally known in a camera called a PTZ camera capable of adjusting the pan, tilt, and zoom. According to the tracking technique, the pan, tilt, and zoom are automatically controlled to keep capturing a tracking object at a target position in an image capturing composition. At this time, by selecting an appropriate mode from a plurality of control modes based on the moving speed of the tracking object and the like, it is possible to track objects whose speeds are different and capture images of the objects. Japanese Patent Laid-Open No. 2019-68183 discloses a method of keeping tracking even an object having a wide speed range from low speed to high speed and capturing an image of the object by having at least two control modes and switching between the control modes based on the moving speed of the tracking object.

In the tracking technique, if a small movement of the object is tracked, video quality is not good. Therefore, in general, the pan, tilt, and zoom speeds of the camera are decreased as the tracking object moves closer to a target position, and when the tracking object moves within a predetermined distance from the target position, control (to be referred to as dead zone control hereinafter) is performed to stop the pan, tilt, and zoom operations. This improves the quality in a case where the object sways there or slightly moves.

However, if the dead zone control is performed, the pan, tilt, and zoom speeds are low or the pan, tilt, and zoom operations stop near the target position, causing the tracking object either to not reach the target position or to reach the target position late. As a result, if the tracking object walks to increase the moving amount, the tracking object does not reach the target position or reaches the target position late although the pan, tilt, and zoom speeds of the camera are increased, thereby degrading video quality.

In the method disclosed in Japanese Patent Laid-Open No. 2019-68183, since it is impossible to switch the mode in a case where the speed of the tracking object is constant, the tracking object may not be able to reach the target position in a case where the speed of the tracking object is low.

SUMMARY OF THE INVENTION

One or more aspects of embodiments of the present disclosure provide a technique of making it easier to make an object closer to a target position or size in a case where the object to be tracked moves.

The present invention in its first aspect provides an arithmetic device as specified in claims 1 to 16.

The present invention in its second aspect provides an arithmetic method as specified in claims 17 and 18.

The present invention in its third aspect provides a computer-readable storage medium as specified in claims 19 and 20.

According to other aspects of the present disclosure, one or more additional arithmetic devices, one or more additional arithmetic methods, and one or more additional storage mediums are discussed herein. Further features of the present disclosure will become apparent from the following description of exemplary embodiments with reference to the attached drawings.

BRIEF DESCRIPTION OF THE DRAWINGS

Fig. 1 is a view showing an example of a configuration of a system according to one or more embodiments of the present disclosure;

Fig. 2 is a block diagram showing examples of hardware configurations that may be used for a camera 100 and a controller 200 according to one or more embodiments of the present disclosure;

Fig. 3 is a block diagram showing examples of software (computer program) configurations that may be used in the camera 100 and the controller 200 according to one or more embodiments of the present disclosure;

Fig. 4A is a flowchart of one or more operations that may be used for the camera 100 according to one or more embodiments of the present disclosure;

Fig. 4B is a flowchart of one or more operations that may be used for the controller 200 according to one or more embodiments of the present disclosure;

Fig. 5A is a graph formed from a relationship between a distance difference and an angular velocity according to one or more embodiments of the present disclosure;

Fig. 5B is a graph showing a correspondence between the distance difference and the angular velocity according to one or more embodiments of the present disclosure;

Fig. 6A is a view showing a display example of a captured image according to one or more embodiments of the present disclosure;

Fig. 6B is a view showing a state in which a user sets a new target position according to one or more embodiments of the present disclosure;

Fig. 7A is a block diagram showing an example of a hardware configuration that may be used for a camera 100 according to one or more embodiments of the present disclosure;

Fig. 7B is a block diagram showing an example of a software (computer program) configuration that may be used in the camera 100 according to one or more embodiments of the present disclosure;

Figs. 8A-1 and 8A-2 are a flowchart of one or more operations that may be used for the camera 100 according to one or more embodiments of the present disclosure;

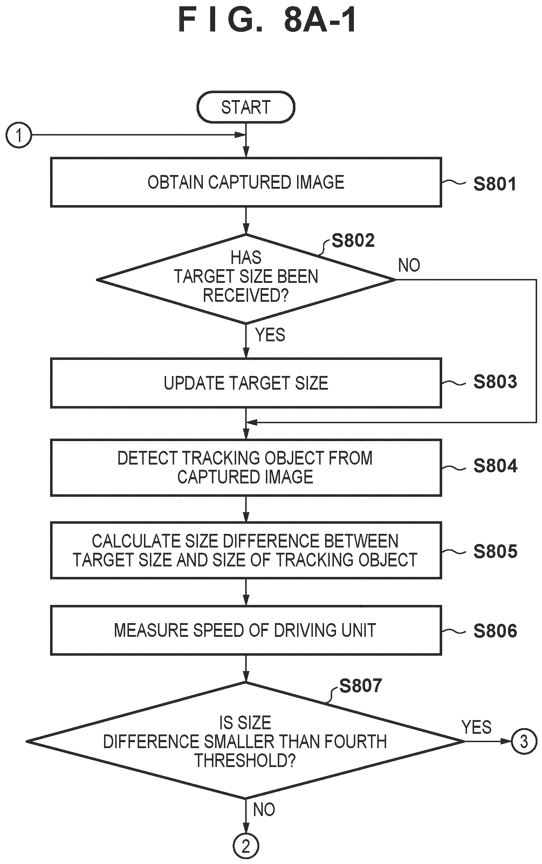

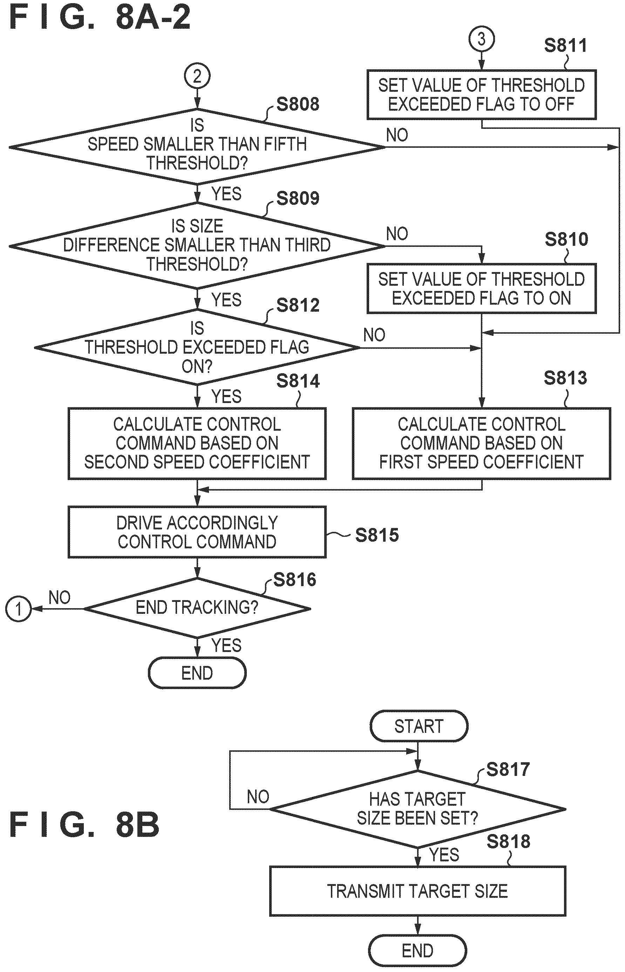

Fig. 8B is a flowchart of one or more operations that may be used for a controller 200 according to one or more embodiments of the present disclosure;

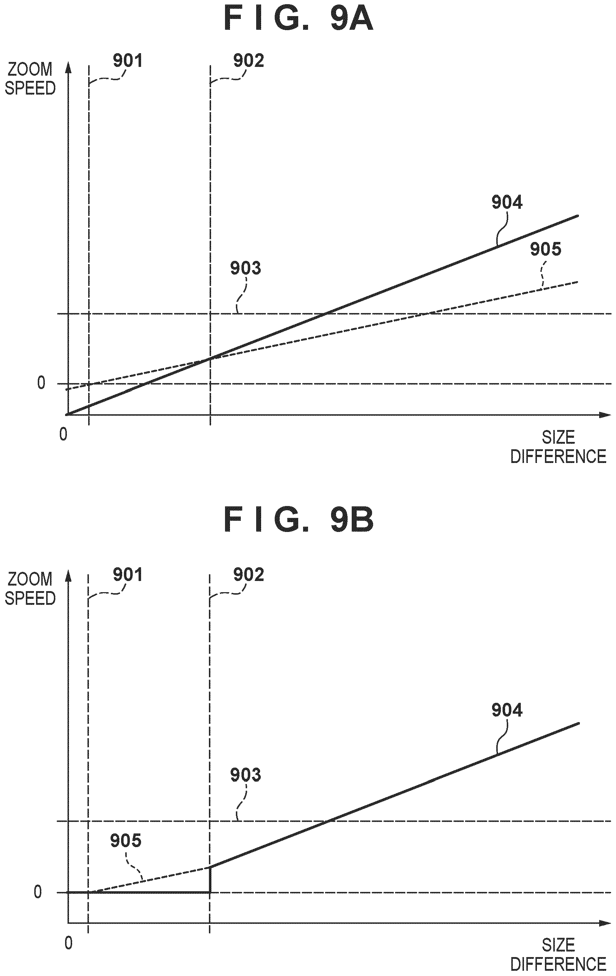

Fig. 9A is a graph formed from a relationship between a size difference and a zoom speed according to one or more embodiments of the present disclosure; and

Fig. 9B is a graph showing a correspondence between the size difference and the zoom speed according to one or more embodiments of the present disclosure.

DESCRIPTION OF THE EMBODIMENTS

Hereinafter, one or more embodiments and/or features of the present disclosure will be described in detail with reference to the attached drawings. Note, the following embodiments are not intended to limit the scope of the claims of the present disclosure. Multiple features are described in the embodiments, but limitation is not made to an embodiment that requires all such features, and multiple such features may be combined as appropriate. Configurations in the following embodiments are merely examples, and the present technique(s)/feature(s) of the present disclosure is/are not limited to the illustrated configurations. Furthermore, in the attached drawings, the same reference numerals are given to the same or similar configurations, and redundant description thereof are omitted.

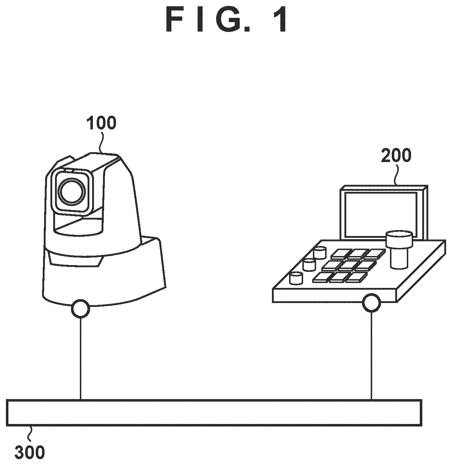

Details of one or more embodiments of the present disclosure follow below: First, an example of a configuration of one or more system embodiments of the present disclosure will be described with reference to Fig. 1. As shown in Fig. 1, at least one system may include a camera 100, and a controller 200 serving as the control device of the camera 100. The camera 100 and the controller 200 are connected to a network 300. The system according to one or more embodiments is configured or operates to perform data communication between the camera 100 and the controller 200 via the network 300. The network 300 includes networks such as a Local Area Network (LAN) and the Internet.

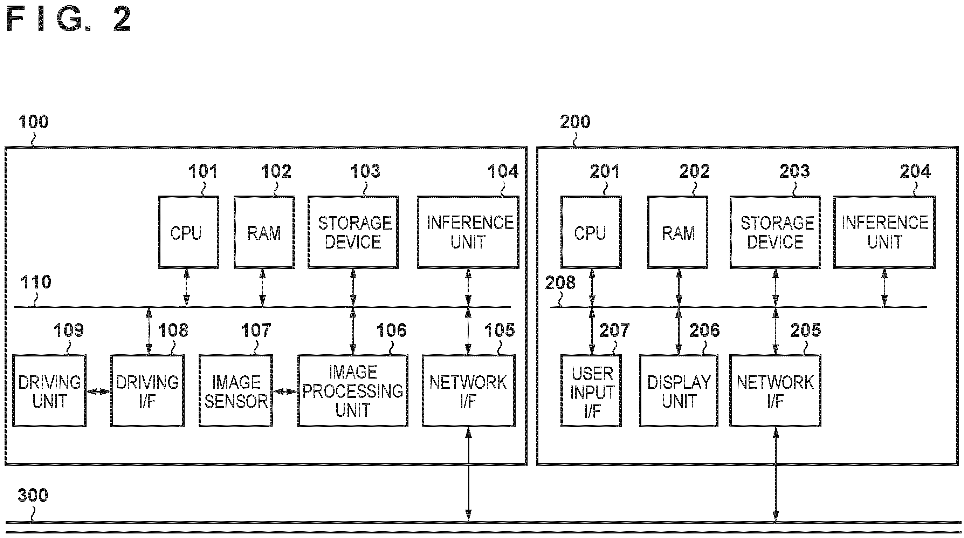

Next, examples of hardware configurations that may be used for the camera 100 and the controller 200 will be described with reference to the block diagram of Fig. 2. Note that the configurations shown in Fig. 2 are merely examples of the hardware configurations of the camera 100 and the controller 200 for one or more embodiments, and can be properly changed/modified for one or more additional embodiments.

First, an example of at least one hardware configuration of the camera 100 will be explained. The camera 100 has a mechanism capable of a pan/tilt operation to change the posture (image capturing direction) of the self-device, and changes the posture by performing a pan/tilt operation based on a result of a detection of an object from a captured image.

A CPU 101 executes various processes using computer programs and data stored in a RAM 102. The CPU 101 controls the overall operation of the camera 100, and executes or controls various processes explained as processes to be performed by the camera 100.

The RAM 102 is a high-speed storage device such as a DRAM in one or more embodiments. The RAM 102 has an area for storing computer programs and data loaded from a storage device 103, and an area for storing captured images output from an image processing unit 106. Furthermore, the RAM 102 has an area for storing various kinds of information received from the controller 200 via a network I/F 105, and a work area used when the CPU 101 and an inference unit 104 execute various processes. In this manner, the RAM 102 can properly provide various storage or work areas.

The storage device 103 is a nonvolatile storage device such as a flash memory, a hard disk drive (HDD), a solid-state drive (SSD), or a Secure Digital (SD) card. The storage device 103 stores setting data of the camera 100, computer programs and data regarding activation of the camera 100, computer programs and data regarding the basic operation of the camera 100, and the like. The storage device 103 also may store computer programs and data for causing the CPU 101 and the inference unit 104 to execute or control various processes described as processes to be performed by the camera 100.

The inference unit 104 performs inference processing for inferring the presence/absence and position of an object and the like from a captured image. The inference unit 104 is, for example, an arithmetic device such as a Graphics Processing Unit (GPU) specialized in image processing and inference processing. A GPU is generally effective for use in inference processing, but a similar function may be implemented by a reconfigurable logic circuit such as a Field Programmable Gate Array (FPGA). Processing of the inference unit 104 may be performed by the CPU 101.

The network I/F 105 is an interface for connection to the network 300, and performs communication with an external device such as the controller 200 via a communication medium such as Ethernet®. Note that a serial communication I/F may be separately prepared and used for communication.

The image processing unit 106 converts an image signal output from an image sensor 107 into a captured image as data of a predetermined format, if necessary, compresses the captured image, and then outputs it to the RAM 102. Note that the image processing unit 106 may perform, on an image represented by the image signal obtained from the image sensor 107, various processes such as an image quality adjustment including color correction, exposure correction, and sharpness correction, and crop processing of cropping an image into only a predetermined region. These processes may be executed in accordance with an instruction received from the controller 200 via the network I/F 105.

The image sensor 107 receives light reflected by an object, converts the brightness and color of the received light into charges, and outputs an image signal based on the conversion result. As the image sensor 107, for example, a photodiode, a Charge Coupled Device (CCD) sensor, or a Complementary Metal Oxide Semiconductor (CMOS) sensor is available.

A driving I/F 108 is an interface for transmitting/receiving an instruction signal such as a control signal to/from a driving unit 109.

The driving unit 109 is a driving mechanism for changing the posture of the camera 100, and includes a mechanical driving system and a driving source motor. In accordance with an instruction received from the CPU 101 via the driving I/F 108, the driving unit 109 performs a pan/tilt operation for horizontally and vertically changing the posture of the camera 100, and a zoom operation for optically changing the angle of view.

All the CPU 101, the RAM 102, the storage device 103, the inference unit 104, the network I/F 105, the image processing unit 106, and the driving I/F 108 are connected to a system bus 110.

Next, the controller 200 will be explained. The controller 200 can receive a captured image transmitted from the camera 100 via the network 300, and transmit the target position of a tracking object based on a user operation on the controller 200 to the camera 100. With this system, the user can use the controller 200 to designate the target position of a tracking object, and use the camera 100 to track the tracking object and capture an image of the tracking object so as to make the tracking object closer to the selected or designated target position.

A CPU 201 executes various processes using computer programs and data stored in a RAM 202. The CPU 201 controls the overall operation of the controller 200, and executes or controls various processes explained as processes to be performed by the controller 200.

The RAM 202 is a high-speed storage device such as a DRAM in one or more embodiments. The RAM 202 has an area for storing computer programs and data loaded from a storage device 203, and an area for storing various data received from the camera 100 via a network I/F 205. Furthermore, the RAM 202 has a work area used when the CPU 201 and an inference unit 204 execute various processes. In this way, the RAM 202 can properly provide various storage or work areas.

The storage device 203 is a nonvolatile storage device such as a flash memory, an HDD, an SSD, or an SD card. The storage device 203 stores setting data of the controller 200, computer programs and data regarding activation of the controller 200, computer programs and data regarding the basic operation of the controller 200, and the like. The storage device 203 may also store computer programs and data for causing the CPU 201 and the inference unit 204 to execute or control various processes explained as processes to be performed by the controller 200.

The inference unit 204 performs inference processing for inferring the presence/absence and position of an object and the like from a captured image. The inference unit 204 is, for example, an arithmetic device such as a Graphics Processing Unit (GPU) specialized in image processing and inference processing. A GPU is generally effective for use in inference processing, but a similar function may be implemented by a reconfigurable logic circuit such as a Field Programmable Gate Array (FPGA). Processing of the inference unit 204 may be performed by the CPU 201.

The network I/F 205 is an interface for connection to the network 300, and performs communication with an external device such as the camera 100 via a communication medium such as Ethernet. For example, communication with the camera 100 includes transmission of a control command to the camera 100, and reception of a captured image from the camera 100.

A display unit 206 is a display unit having a screen such as a liquid crystal screen or a touch panel screen. The display unit 206 can display a captured image received from the camera 100, the setting screen of the controller 200, and the like. In at least this embodiment, a case where the display unit 206 is a display unit having a touch panel screen will be explained.

Note that the features and the one or more embodiments of the present disclosure are not limited to a case where the controller 200 includes the display unit 206. For example, the display unit 206 may be omitted from the controller 200, and a display device may be connected to the controller 200 to display a captured image, the setting screen of the controller 200, and the like on the display device.

A user input I/F 207 is an interface for accepting an operation on the controller 200 from the user, and includes, for example, buttons, a dial, a joy stick, and a touch panel.

All the CPU 201, the RAM 202, the storage device 203, the inference unit 204, the network I/F 205, the display unit 206, and the user input I/F 207 are connected to a system bus 208. Note that the controller 200 may be a personal computer (PC) having a mouse, a keyboard, and the like as the user input I/F 207.

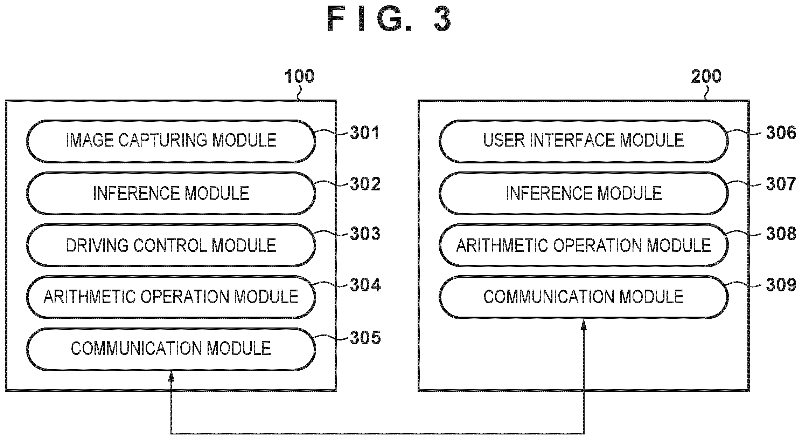

Next, Fig. 3 is a block diagram showing examples of software (computer program) configurations that may be used in the camera 100 and the controller 200. Note that an illustration of general-purpose software such as an operating system is omitted in Fig. 3.

An image capturing module 301, an inference module 302, a driving control module 303, an arithmetic operation module 304, and a communication module 305 are stored as software components in the storage device 103 of the camera 100 in the subject embodiment example. The CPU 101 properly deploys these software components from the storage device 103 to the RAM 102, and uses them.

A user interface module 306, an inference module 307, an arithmetic operation module 308, and a communication module 309 are stored as software components in the storage device 203 of the controller 200 in the subject embodiment example. The CPU 201 properly deploys these software components from the storage device 203 to the RAM 202, and uses them.

Note that the software configuration shown in Fig. 3 is merely an example. For example, one functional unit may be divided by function into a plurality of functional units, or a plurality of functional units may be integrated into one functional unit. One or more functional units shown in Fig. 3 may be implemented by hardware.

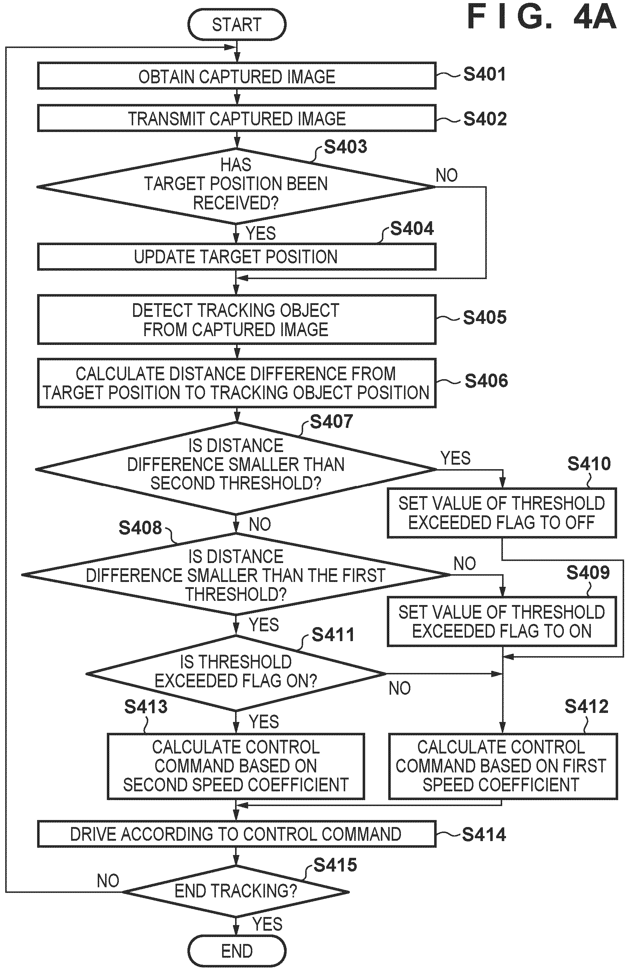

Next, the operation of each of the camera 100 and the controller 200 in the system according to the subject embodiment will be explained. First, the operation of the camera 100 will be explained with reference to the flowchart of Fig. 4A.

In step S401, the CPU 101 reads out the image capturing module 301 from the storage device 103 to the RAM 102, deploys it, and executes the deployed image capturing module 301. Then, the CPU 101 obtains a captured image from the image processing unit 106 and stores it in the RAM 102.

In step S402, the CPU 101 reads out the communication module 305 from the storage device 103 to the RAM 102, deploys it in the RAM 102, and executes the deployed communication module 305. Then, the CPU 101 transmits the captured image stored in the RAM 102 to the controller 200 via the network I/F 105.

In step S403, the CPU 101 reads out the arithmetic operation module 304 from the storage device 103 to the RAM 102, deploys it in the RAM 102, and executes the deployed arithmetic operation module 304. Then, the CPU 101 determines whether "the target position of the tracking object" transmitted from the controller 200 has been received via the network I/F 105.

If the CPU 101 determines that the target position has been received, it shifts the process to step S404. If the CPU 101 determines that the target position has not been received, it shifts the process to step S405.

In step S404, the CPU 101 executes the arithmetic operation module 304 deployed in the RAM 102. Then, the CPU 101 stores, in the RAM 102, the target position received from the controller 200 via the network I/F 105.

In step S405, the CPU 101 reads out the inference module 302 from the storage device 103 to the RAM 102, deploys it in the RAM 102, and executes the deployed inference module 302. Then, the CPU 101 inputs the captured image stored in the RAM 102 in step S401 to the inference unit 104, controls the inference unit 104 to detect a tracking object from the captured image, and stores the result (to be referred to as the detection result hereinafter) of the detection in the RAM 102.

At this time, the inference unit 104 reads out a learned model created using a machine learning method such as deep learning from the storage device 103 to the RAM 102, and deploys it in the RAM 102. Then, the inference unit 104 detects a tracking object from the captured image by inputting the captured image into the learned model and performing arithmetic processing of the learned model, and outputs, as the detection result, position information representing the position of the tracking object in the captured image. Note that the CPU 101 may reduce the captured image and the inference unit 104 may input the reduced captured image into the learned model. This can reduce the processing amount of the inference unit 104 and speed up inference processing.

The result of detecting the tracking object by the inference unit 104 will now be described. If the inference unit 104 inputs a captured image into a learned model, and performs arithmetic processing of the learned model, the inference unit 104 outputs, as position information representing the position of the tracking object in the captured image, rectangle information (for example, the coordinates of upper left and lower right vertices of a rectangle) that defines the rectangle including the whole body of the tracking object. Note that the rectangle information is not limited to information representing the whole body of the tracking object, but may be information representing a part of the tracking object, for example, in a case where the tracking object is a person, the position of the head or face of the person. In this case, the learned model used may be changed to a learned model that becomes a desired input/output. Furthermore, the position information of the tracking object is not limited to the coordinates of upper left and lower right vertices of a rectangle including the whole body of the tracking object, and suffices to be information capable of defining the position of a tracking object in a captured image such as the coordinates of the center of the rectangle or the width or height of the rectangle.

Note that the method of detecting a tracking object from a captured image by the inference unit 104 is not limited to a specific method. For example, the inference unit 104 may use a template matching method of registering the template image of a tracking object in the storage device 103 or the like in advance, and detecting a region highly similar to the template image as a tracking object region in a captured image.

In step S406, the CPU 101 executes the arithmetic operation module 304 deployed in the RAM 102. Then, the CPU 101 calculates a distance (distance difference) between the target position stored in the RAM 102 and an object position derived from the result of detecting the tracking object stored in the RAM 102. For example, if the target position is the center position of the tracking object region, the CPU 101 calculates the center position of the tracking object region as the object position from the result of detecting the tracking object stored in the RAM 102.

The distance difference indicates a distance from the target position to the object position on the captured image, and the unit is a pixel. The CPU 101 stores the calculated distance difference in the RAM 102.

In step S407, the CPU 101 executes the arithmetic operation module 304 deployed in the RAM 102. Then, the CPU 101 determines whether the distance difference stored in the RAM 102 is smaller than the second threshold. The second threshold is a threshold preset as a criterion for determining that the distance difference from the target position to the object position is sufficiently small.

If the CPU 101 determines that the distance difference stored in the RAM 102 is smaller than the second threshold, it shifts the process to step S410. If the CPU 101 determines that the distance difference stored in the RAM 102 is not smaller than the second threshold, it shifts the process to step S408.

Note that the branch condition of the processing in step S407 is not limited to the threshold determination of the distance difference. Since the CPU 101 stops a tracking operation in a case where the distance difference is sufficiently small, the CPU 101 may branch the processing after step S407 in accordance with whether the tracking operation has stopped. For example, whether the tracking operation has stopped can be determined depending on whether an angle change has stopped by an angle sensor (not shown) that measures the rotation angle of the driving unit 109. If the tracking operation has stopped, the CPU 101 shifts the process to step S410. If the tracking operation has not stopped, the CPU 101 shifts the process to step S408.

As another example, the processing from step S407 may be branched in accordance with an elapsed time after switching to speed calculation by equation (4) to be described later. In this case, the CPU 101 measures an elapsed time after switching to speed calculation by equation (4). If the elapsed time is equal to or larger than a threshold, the CPU 101 shifts the process to step S410. If the elapsed time is smaller than the threshold, the CPU 101 shifts the process to step S408.

In step S408, the CPU 101 executes the arithmetic operation module 304 deployed in the RAM 102. Then, the CPU 101 determines whether the distance difference stored in the RAM 102 is smaller than the first threshold where the first threshold is larger than the second threshold.

The first threshold is a threshold preset as a criterion for determining whether the tracking object only sways there or starts to move. That is, in the subject embodiment example, if the distance difference between the target position and the object position is smaller than the first threshold, it is determined that the tracking object only sways there. If the distance difference is not smaller than the first threshold, it is determined that the tracking object has moved.

Note that the first threshold is set by reading out a value stored in advance in the RAM 102 or the storage device 103. However, since the relative distance difference changes depending on the image capturing size of the tracking object, the first threshold may be set as the optimum threshold in accordance with the image capturing size. In this way, it is possible to cope with a case where the zoom is changed during the tracking operation.

If the CPU 101 determines that the distance difference stored in the RAM 102 is smaller than the first threshold, it shifts the process to step S411. If the CPU 101 determines that the distance difference stored in the RAM 102 is not smaller than the first threshold, it shifts the process to step S409.

In step S409, the CPU 101 sets, to ON, the value of a threshold exceeded flag as a flag storing a result that the distance difference stored in the RAM 102 exceeds the first threshold, stores it in the RAM 102, and then shifts the process to step S412. On the other hand, in step S410, the CPU 101 sets the value of the threshold exceeded flag to OFF, stores it in the RAM 102, and then shifts the process to step S412. The initial value of the threshold exceeded flag is set to "OFF".

In step S411, the CPU 101 executes the arithmetic operation module 304 deployed in the RAM 102. Then, the CPU 101 determines whether the value of the threshold exceeded flag stored in the RAM 102 is ON.

If the CPU 101 determines that the value of the threshold exceeded flag is ON, it shifts the process to step S413. If the CPU 101 determines that the value of the threshold exceeded flag is OFF, it shifts the process to step S412.

In step S412, the CPU 101 executes the arithmetic operation module 304 deployed in the RAM 102. Then, the CPU 101 converts the distance difference stored in the RAM 102 into an angular difference (the pan angle and tilt angle of the camera 100). For example, the CPU 101 approximately calculates an angle per pixel of the captured image using information of the image capturing resolution and angle of view of image capturing of the camera 100, and calculates, as an angular difference, a result of multiplying the angle by the distance difference. Then, the CPU 101 calculates an angular velocity in the pan/tilt direction corresponding to the calculated angular difference. Letting $a$ be the calculated angular difference, $g\_1$ be the first velocity coefficient, and $v\_1$ be the first offset angular velocity, the CPU 101 calculates the first angular velocity $\omega\_1$ in accordance with equation (1):

$$\omega\_1 = a \times g\_1 + v\_1 \qquad ...(1)$$

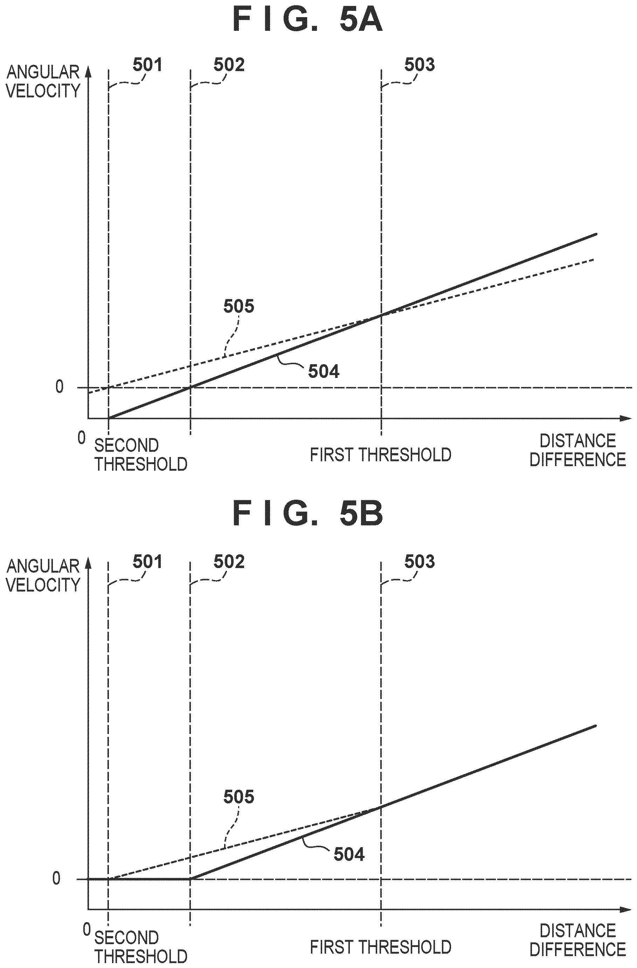

Fig. 5A shows a graph formed from the relationship between the distance difference and the angular velocity. In the graph of Fig. 5A, the abscissa represents the distance difference, and the ordinate represents the angular velocity. A straight line obtained by equation (1) above is a straight line 504, and the straight line 504 has such shape that the angular velocity increases in proportion to the distance difference. A distance difference 502 indicates the first dead zone associated with the straight line 504 of equation (1). The dead zone indicates the range of the distance difference within which the angular velocity in the pan direction and the angular velocity in the tilt direction are 0. That is, the straight line 504 of equation (1) outputs a negative angular velocity within a range smaller than the distance difference 502, but the CPU 101 outputs 0 as an angular velocity corresponding to the straight line 504 in a case where the distance difference is smaller than the distance difference 502.

Note that even for the same distance difference, as the value of the first velocity coefficient $g\_1$ is larger, the corresponding angular velocity is larger, and as the value of the first offset angular velocity $v\_1$ is smaller, the first dead zone is larger. The values of the first velocity coefficient $g\_1$ and the first offset angular velocity $v\_1$ may be determined experimentally or may be arbitrarily set by the user by operating the controller 200.

Then, the CPU 101 generates a control command for causing the driving unit 109 to rotate the camera 100 in the pan direction and/or the tilt direction at the first angular velocity in the pan direction and/or the tilt direction, and stores the generated control command in the RAM 102.

In step S413, the CPU 101 executes the arithmetic operation module 304 deployed in the RAM 102. Then, the CPU 101 calculates an angular difference (the pan angle and tilt angle of the camera 100) from the distance difference stored in the RAM 102, similar to step S412. Then, the CPU 101 calculates an angular velocity in the pan/tilt direction corresponding to the calculated angular difference. Letting $a$ be the calculated angular difference, $g\_2$ be the second velocity coefficient, and $v\_2$ be the second offset angular velocity, the CPU 101 calculates the second angular velocity $\omega\_2$ in accordance with equation (2):

$$\omega\_2 = a \times g\_2 + v\_2 \qquad ...(2)$$

In Fig. 5A, a straight line obtained by equation (2) above is a straight line 505, and the straight line 505 has such shape that the angular velocity increases in proportion to the distance difference, similar to equation (1) above. A distance difference 501 indicates the second dead zone associated with the straight line 505 of equation (2). That is, the straight line 505 of equation (2) outputs a negative angular velocity within a range smaller than the distance difference 501, but the CPU 101 outputs 0 as an angular velocity corresponding to the straight line 505 in a case where the distance difference is smaller than the distance difference 501.

Note that even for the same distance difference, as the value of the second velocity coefficient $g\_2$ is larger, the corresponding angular velocity is larger, and as the value of the second offset angular velocity $v\_2$ is smaller, the second dead zone is larger. The values of the second velocity coefficient $g\_2$ and the second offset angular velocity $v\_2$ may be determined experimentally or may be arbitrarily set by the user by operating the controller 200. Note that the first velocity coefficient $g\_1$, the second velocity coefficient $g\_2$, the first offset angular velocity $v\_1$, and the second offset angular velocity $v\_2$ are determined so that, within the range of the distance difference 501 (inclusive) to a distance difference 503 (exclusive), an angular velocity corresponding to a distance difference X within the range on the straight line 505 of equation (2) is larger than an angular velocity corresponding to the distance difference X on the straight line 504 of equation (1). For example, these values are set to satisfy $g\_2 < g\_1$ and

$$v\_2 > v\_1.$$

Then, the CPU 101 generates a control command for causing the driving unit 109 to rotate the camera 100 in the pan direction and/or the tilt direction at the second angular velocity in the pan direction and/or the tilt direction, and stores the generated control command in the RAM 102.

In consideration of the above-described points, Fig. 5B shows the correspondence between the distance difference and the angular velocity. In this embodiment example, the distance difference 501 with which the tracking operation stops since the distance difference from the target position to the object position is sufficiently small is set as the second threshold, and the distance difference 503 with which it can be determined that the tracking object has moved since the distance difference from the target position to the object position is large is set as the first threshold.

As shown in Fig. 5B, the straight line 504 is substantially a function of outputting 0 as the first angular velocity in a case where the distance difference is smaller than the distance difference 502, and outputting the first angular velocity calculated in accordance with equation (1) in a case where the distance difference is equal to or larger than the distance difference 502. Furthermore, the straight line 505 is substantially a function of outputting 0 as the second angular velocity in a case where the distance difference is smaller than the distance difference 501, and outputting the second angular velocity calculated in accordance with equation (2) above in a case where the distance difference is equal to or larger than the distance difference 501 and smaller than the distance difference 503.

Note that for a method of calculating an angular velocity in a case where the distance difference is equal to or larger than the distance difference 503, there is no restriction on which of equations (1) and (2) is used in one or more embodiments, but this embodiment assumes that an angular velocity is calculated by equation (1). This is because with respect to the angular velocity in the pan direction and the tilt direction in a case where the distance difference is equal to or larger than the distance difference 503, the result of equation (1) is larger than the result of equation (2), and it is thus easy to keep tracking even a high-speed tracking object.

Therefore, in the example shown in Fig. 5B, if the distance difference is smaller than the distance difference 501, the angular velocity is 0, and if the distance difference is equal to or larger than the distance difference 503, the angular velocity is the first angular velocity calculated by equation (1) above.

If the distance difference changes from the state in which "the distance difference is smaller than distance difference 501" to the state in which "the distance difference is equal to or larger than the distance difference 501 and smaller than the distance difference 503", the angular velocity is the first angular velocity calculated by equation (1) above (but is 0 by processing of the dead zone in a case where the distance difference is equal to or larger than the distance difference 501 and smaller than the distance difference 502).

If the distance difference changes from the state in which "the distance difference is equal to or larger than the distance difference 503" to the state in which "the distance difference is equal to or larger than the distance difference 501 and smaller than the distance difference 503", the angular velocity is the second angular velocity calculated by equation (2) above.

Note that in this embodiment example, as shown in Fig. 5B, the distance difference at the intersection of the straight lines 504 and 505 is set as the distance difference 503, and if the distance difference exceeds the distance difference 503, the straight line used is switched between the straight lines 504 and 505. Thus, if the distance difference is the distance difference 503, the angular velocity matches between the straight lines 504 and 505. Therefore, even if the distance difference 503 is set as the first threshold and the straight line used is switched from the straight line 504 to the straight line 505, the output angular velocity can be prevented from being temporally discontinuous. However, the distance difference 503 is not limited to this, and may be larger or smaller than the value at the intersection. In this case, the straight line 504 is gradually switched to the straight line 505 so as to prevent the output angular velocity from being temporally discontinuous.

With the processes in steps S407 to S413, for example, a tracking operation is slowly started at the small angular velocity in the pan/tilt direction obtained by equation (1) at the start of the tracking operation. Next, during tracking, the posture of the camera 100 is controlled so as to decrease the distance difference, and as the distance difference increases, the larger angular velocity in the pan/tilt direction given by equation (1) is obtained. Then, at the beginning of the stop of the tracking operation after the distance difference exceeds the first threshold, the control method is switched, and the larger angular velocity in the pan/tilt direction given by equation (2) is obtained so as to further decrease the distance difference. Therefore, it becomes easy to make the object position closer to the target position.

Note that this embodiment example has explained, as the method of calculating the control method, the method of obtaining linear angular velocity given by equation (1) or (2) but the calculation method is not limited to this. For example, two types of quadratic curves having a relationship similar to equations (1) and (2) described above may be used to obtain an angular velocity. This allows the tracking operation to slowly start, and allows an operation of keeping tracking more easily if the distance difference increases during tracking.

In step S414, the CPU 101 reads out the driving control module 303 from the storage device 103 to the RAM 102, deploys it in the RAM 102, and executes the deployed driving control module 303. Then, the CPU 101 derives, from the control command stored in the RAM 102, a driving parameter for performing a pan/tilt operation at a desired angular velocity in a desired direction. The driving parameter indicates a parameter for driving and controlling a motor (not shown) in each of the pan direction and the tilt direction included in the driving unit 109. Subsequently, the CPU 101 drives and controls the driving unit 109 via the driving I/F 108 based on the derived driving parameter. When the driving unit 109 is driven based on the driving parameter, the camera 100 changes the image capturing direction (the posture), that is, performs a pan/tilt operation.

In step S415, the CPU 101 executes the arithmetic operation module 304 deployed in the RAM 102. Then, the CPU 101 determines whether an end condition for ending tracking is satisfied. Various conditions are applicable as the end condition, and the features and the one or more embodiments of the present disclosure are not limited to a specific condition. The end condition is, for example, a condition that "a tracking end instruction has been received from the controller 200", a condition that "the current date/time has reached a predetermined date/time", or a condition that "a predetermined time has elapsed since the start of tracking".

If the CPU 101 determines that the end condition is satisfied, it ends the processing according to the flowchart of Fig. 4A. On the other hand, if the CPU 101 determines that the end condition is not satisfied, it returns the process to step S401.

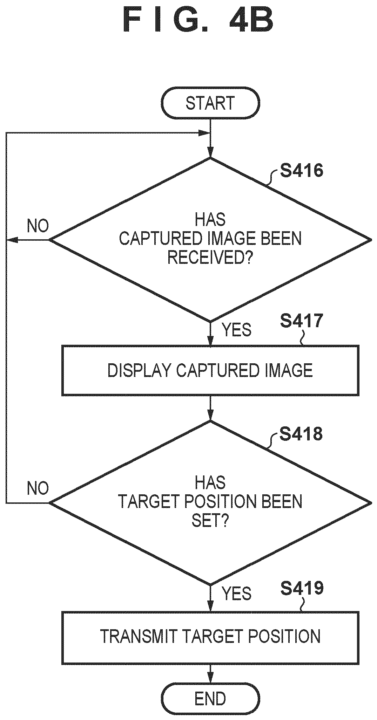

Next, the operation of the controller 200 will be explained with reference to the flowchart shown in Fig. 4B.

In step S416, the CPU 201 reads out the arithmetic operation module 308 from the storage device 203 to the RAM 202, deploys it in the RAM 202, and executes the arithmetic operation module 308. Then, the CPU 201 determines whether a captured image transmitted from the camera 100 has been received via the network I/F 205. Note that a captured image may be received via the video input I/F (not shown) of the controller 200 instead of the network I/F 205. In this case, the video input I/F is connected to the video output I/F (not shown) of the camera 100 by a video transmission cable. This can cope with a case where the communication band of the network 300 is insufficient in transmission/reception of a captured image.

If the CPU 201 determines that a captured image has been received from the camera 100, it stores the received captured image in the RAM 202, and advances the process to step S417. On the other hand, if the CPU 201 determines that a captured image has not been received from the camera 100, it returns the process to step S416.

In step S417, the CPU 201 reads out the user interface module 306 from the storage device 203 to the RAM 202, deploys it in the RAM 202, and executes the deployed user interface module 306. Then, the CPU 201 displays the captured image stored in the RAM 202 on the display unit 206.

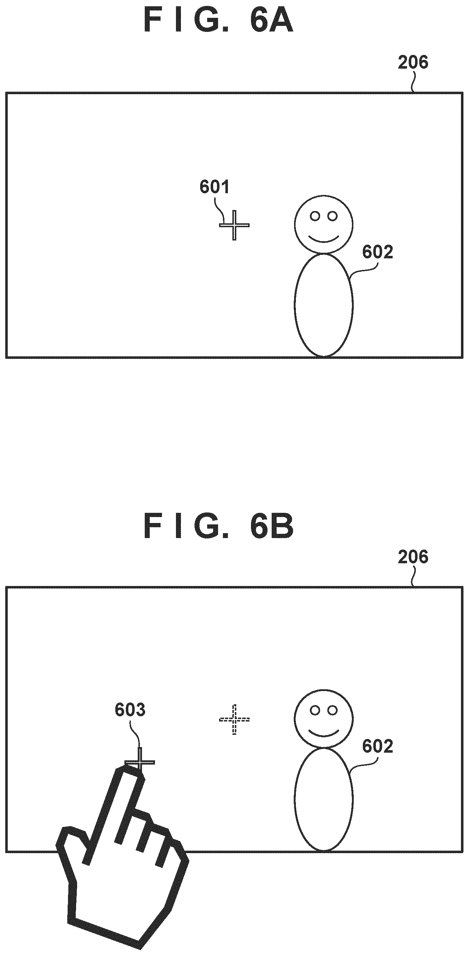

Fig. 6A shows a display example of the captured image on the display unit 206. As shown in Fig. 6A, a captured image including a tracking object 602 is displayed on the display screen of the display unit 206, and an icon 601 indicating the current target position in image capturing of the tracking object 602 is superimposed and displayed on the captured image. The user can confirm the image captured by the camera 100 and the target position by checking the display screen of the display unit 206.

In step S418, the CPU 201 executes the user interface module 306 deployed in the RAM 202. Then, the CPU 201 accepts a touch operation for "tracking object target position setting operation" by the user on the display unit 206. Fig. 6B shows a state in which the user sets a new target position in the display example of Fig. 6A. In Fig. 6B, the user touches a position different from the target position indicated by the icon 601 with his/her finger, thereby setting the position as a new target position. An icon 603 indicates the target position newly set by the user operation.

Note that the method of setting the target position is not limited to a specific method. For example, the user may set the target position by operating the user input I/F 207. Then, the CPU 201 determines whether a touch operation for "tracking object target position setting operation" has been input.

If the CPU 201 determines that a touch operation for "tracking object target position setting operation" has been input, it stores, in the RAM 202, as a new target position, a position set by the touch operation on the captured image, and shifts the process to step S419. On the other hand, if the CPU 201 determines that a touch operation for "tracking object target position setting operation" has not been input, it returns the process to step S416.

Note that in this embodiment example, the target of the tracking object is "position" but is not limited to this. For example, "region" (target region) may be set as the target of the tracking object. In the target region, if the object position enters the target region, it is determined that the object reaches the target position. This is effective since it is possible to suppress an excessive tracking operation for a small vibration of the object position.

In step S419, the CPU 201 reads out the communication module 309 from the storage device 203 to the RAM 202, deploys it in the RAM 202, and executes the communication module 309. Then, the CPU 201 transmits the new target position stored in the RAM 202 to the camera 100 via the network I/F 205.

As describe above, in this embodiment example, movement/non-movement of the object is determined in accordance with the distance difference between the target position and the object position, and the method of controlling the posture of the camera 100 is switched in accordance with the result of the determination. Thus, if the object moves, it is possible to easily make the object position closer to the target position.

That is, in this embodiment example, in a configuration of calculating a control speed for controlling the posture of an image capturing device so that the detection position of an object detected from an image captured by the image capturing device becomes closer to the target position of the object in the captured image, an example of the image capturing device of calculating, in a state in which the difference between the detection position and the target position is equal to or larger than the first threshold, the first control speed as the control speed of the posture in accordance with the difference, and calculating, in a case where the difference becomes smaller than the first threshold and equal to or larger than the second threshold smaller than the first threshold after the above state, as the control speed of the posture, the second control speed higher than the first control speed in accordance with the difference has been explained.

Note that as will be described below, any features of the present disclosure of the subject embodiment example(s) and the below-discussed embodiment example(s) may be combined. In this case, in a case where the control speed of the posture of the image capturing device is smaller than a threshold, in a state in which the above difference is equal to or larger than the first threshold, the first control speed may be calculated as the control speed of the posture in accordance with the difference, and in a case where the difference becomes smaller than the first threshold and equal to or larger than the second threshold after the above state, the second control speed may be calculated as the control speed of the posture in accordance with the difference.

In a case where the control speed of the posture of the image capturing device is equal to or larger than the threshold, the first control speed may be calculated as the control speed of the posture in accordance with the difference, and in a case where the difference becomes smaller than the first threshold and equal to or larger than the second threshold after a state in which the difference is smaller than the second threshold, the control speed of the posture may be set to 0.

Note that in this embodiment example, based on the captured image obtained in step S401, the distance difference at the time of obtaining the captured image is calculated, but the method of calculating the distance difference is not limited to this. For example, a cumulative distance difference calculated by integrating the distance difference calculated for each captured image up to the present time may be set as the distance difference at the present time. Thus, since the moving speed of the tracking object balances with the pan/tilt angular velocity of the camera 100, even if the distance difference between the target position and the object position on the captured image remains unchanged, it can be determined, based on the cumulative distance difference, whether the tracking object has moved.

Note that in this embodiment example, the camera 100 calculates a driving amount for detecting and tracking an object. However, the controller 200 may execute part or all of the processing. In this case, for example, the camera 100 transmits a captured image to the controller 200. The controller 200 detects a tracking object from the received captured image, calculates a driving parameter for tracking the tracking object, as described above, and transmits the driving parameter to the camera 100. Then, the camera 100 tracks the tracking object and captures an image of the tracking object, as described above, in accordance with the received driving parameter. At this time, the processing performed by the inference unit 104 of the camera 100 may be performed by the inference unit 204 of the controller 200, and the functions of the inference module 302 and the arithmetic operation module 304 of the camera 100 may be executed by the inference module 307 and the arithmetic operation module 308 of the controller 200, respectively. Thus, even if the camera 100 has no inference function, the same effect can be obtained.

In one or more additional embodiments, the difference from the above-described embodiment(s) will be explained below, and the one or more additional embodiments are similar to the above-described embodiment(s), unless otherwise specified. One or more embodiments discussed below will describe a method of making it easy to make an object size closer to a target size by switching a method of calculating an angular velocity based on comparison of a threshold and a difference between a target size of a tracking object in an image capturing composition and a detection size (to be referred to as an object size hereinafter) of the tracking object. Note that control to be described in the subject embodiment(s) and the control described in the above-described embodiment(s) may be executed in combination in one or more embodiments.

The subject embodiment(s) will also explain an example in which a configuration of measuring the operation speed of a driving unit 109 of a camera 100 is newly provided and a method of calculating an angular velocity is switched in accordance with the operation speed. Note that switching of the method of calculating the angular velocity in accordance with the operation speed may be performed in combination with the control described hereinabove.

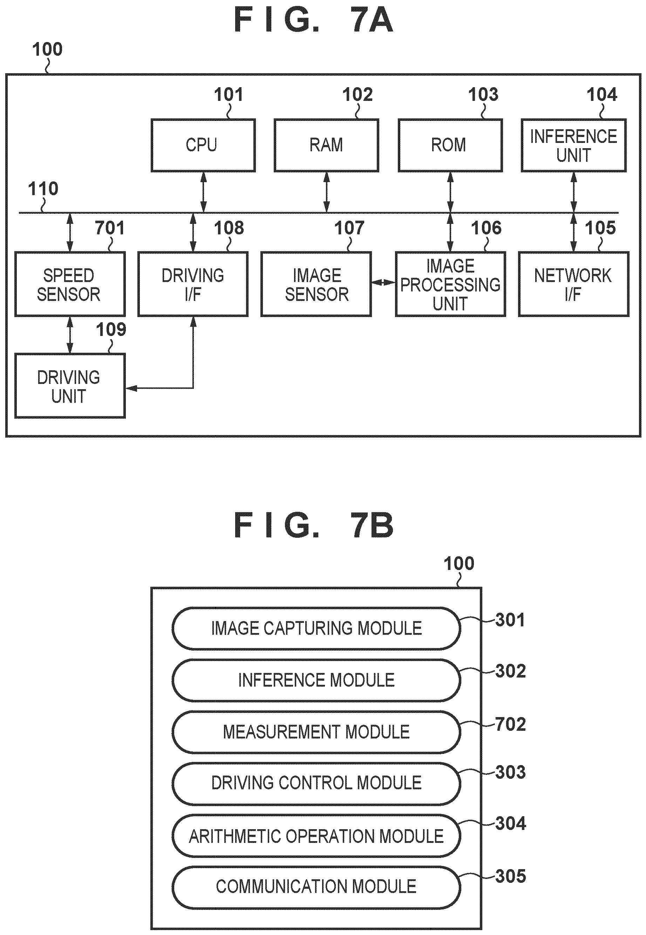

An example of at least one hardware configuration of the camera 100 according to the subject embodiment(s) will be described with reference to a block diagram shown in Fig. 7A. Note that the configuration shown in Fig. 7A is merely an example of the hardware configuration of the camera 100, and can be properly changed/modified.

A speed sensor 701 is a sensor that measures the operation speed (driving speed) of a driving mechanism provided in the driving unit 109 of the camera 100. In the subject embodiment(s), the speed sensor 701 obtains the driving speed of the driving unit 109 in "degrees/second". The speed sensor 701 is connected to a system bus 110.

Next, Fig. 7B is a block diagram showing an example of at least one embodiment of the software (computer program) configuration in the camera 100. Note that an illustration of general-purpose software such as an operating system is omitted in Fig. 7B. Note that the software configuration shown in Fig. 7B is merely an example. For example, one functional unit may be divided by function into a plurality of functional units, or a plurality of functional units may be integrated into one functional unit. One or more functional units shown in Fig. 7B may be implemented by hardware.

Next, the operation of each of the camera 100 and a controller 200 in the system according to one or more of the embodiments will be explained. First, the operation of the camera 100 will be explained with reference to the flowchart of Figs. 8A-1 and 8A-2.

Step S801 is the same as step S401 of Fig. 4A and a description thereof will be omitted.

In step S802, the CPU 101 reads out an arithmetic operation module 304 from a storage device 103 to a RAM 102, deploys it in the RAM 102, and executes the deployed arithmetic operation module 304. Then, the CPU 101 determines whether the target size of a tracking object has been received from the controller 200 via a network I/F 105.

If the CPU 101 determines that the target size has been received, it shifts the process to step S803. If the CPU 101 determines that the target size has not been received, it shifts the process to step S804.

The target size of the tracking object is the size of the tracking object to be captured in a captured image, and is expressed, in the subject embodiment(s), by the ratio of the length in the horizontal direction of the tracking object region to the length in the horizontal direction of the captured image. That is, the target size is expressed by the ratio of the width of the tracking object to the width of the captured image. Note that the target size is not limited to the above ratio of the width, and may be the ratio of the height of the tracking object to the height of the captured image. That is, a method of calculating the size of the tracking object with respect to the captured image is not limited to a specific method. In addition, the target size is defined in advance, and for example, the ratio of the size for capturing the whole body or upper body of the tracking object in a captured image is defined.

In step S803, the CPU 101 executes the arithmetic operation module 304 deployed in the RAM 102. Then, the CPU 101 stores, in the RAM 102, the target size received from the controller 200 via the network I/F 105.

Step S804 is the same as step S405 of Fig. 4A, but, in the subject embodiment example, size information representing the length in the horizontal direction of the tracking object region in the captured image is output as a detection result.

In step S805, the CPU 101 executes the arithmetic operation module 304 deployed in the RAM 102. Then, the CPU 101 calculates, as an object size, the ratio of "the length represented by the size information" to the length in the horizontal direction of the captured image. The CPU 101 calculates the difference (size difference) between the object size and the target size stored in the RAM 102, and stores the size difference in the RAM 102.

In step S806, the CPU 101 reads out a measurement module 702 from the storage device 103 to the RAM 102, deploys it in the RAM 102, and executes the deployed measurement module 702. Then, the CPU 101 measures the driving speed of the driving unit 109, and stores the measured driving speed in the RAM 102.

In step S807, the CPU 101 executes the arithmetic operation module 304 deployed in the RAM 102. Then, the CPU 101 determines whether the size difference stored in the RAM 102 is smaller than a fourth threshold. The fourth threshold is a threshold preset as a criterion for determining that the size difference from the target size to the object size is sufficiently small.

If the CPU 101 determines that the size difference is smaller than the fourth threshold, it shifts the process to step S811. On the other hand, if the CPU 101 determines that the size difference is not smaller than the fourth threshold, it shifts the process to step S808.

In step S808, the CPU 101 executes the arithmetic operation module 304 deployed in the RAM 102. Then, the CPU 101 determines whether the driving speed of the driving unit 109 stored in the RAM 102 is less than a fifth threshold.

If the CPU 101 determines that the driving speed is less than the fifth threshold, it shifts the process to step S809. If the CPU 101 determines that the driving speed is not less than the fifth threshold, it shifts the process to step S813.

In step S809, the CPU 101 executes the arithmetic operation module 304 deployed in the RAM 102. Then, the CPU 101 determines whether the size difference stored in the RAM 102 is smaller than a third threshold, where the third threshold is larger than the fourth threshold. The third threshold is a threshold preset as a criterion for determining whether the tracking object only sways there or starts to move.

If the CPU 101 determines that the size difference stored in the RAM 102 is smaller than the third threshold, it shifts the process to step S812. If the CPU 101 determines that the size difference stored in the RAM 102 is not smaller than the third threshold, it shifts the process to step S810.

That is, in the subject embodiment example, if the size difference is smaller than the third threshold, it is determined that the tracking object only sways there. If the size difference is not smaller than the third threshold, it is determined that the tracking object has moved.

Note that the third threshold is set by reading out a value stored in advance in the RAM 102 or the storage device 103. However, since the relative size difference changes depending on the image capturing size of the tracking object, the third threshold may be set as the optimum threshold in accordance with the image capturing size. In this way, it is possible to cope with a case where the zoom is changed during a tracking operation.

In step S810, the CPU 101 sets, to ON, the value of a threshold exceeded flag as a flag storing a result that the size difference stored in the RAM 102 exceeds the third threshold, stores it in the RAM 102, and then shifts the process to step S813. On the other hand, in step S811, the CPU 101 sets the value of the threshold exceeded flag to OFF, stores it in the RAM 102, and then shifts the process to step S813. In the subject embodiment example as well, the initial value of the threshold exceeded flag is set to "OFF".

In step S812, the CPU 101 executes the arithmetic operation module 304 deployed in the RAM 102. Then, the CPU 101 determines whether the value of the threshold exceeded flag stored in the RAM 102 is ON.

If the CPU 101 determines that the value of the threshold exceeded flag is ON, it shifts the process to step S814. If the CPU 101 determines that the value of the threshold exceeded flag is OFF, it shifts the process to step S813.

At this time, the reason why it is determined whether the driving speed exceeds the threshold in step S808 in addition to the determination of whether the size difference exceeds the threshold in step S809 is that an automatic tracking system with a processing delay can also be adapted. For example, in this system, there is a delay from when a tracking object stops until a control command of the stop is applied, and the driving unit of the camera continues to be driven by inertia. Thus, if the driving speed exceeds the threshold, it is expected that the driving amount by inertia increases due to the delay. To cope with this, even if a high-speed calculation method is selected since the size difference exceeds the third threshold, if the driving speed exceeds the fifth threshold, a low-speed calculation method is reselected, thereby making it easy to make the tracking object closer to the target position by estimating the driving amount by inertia caused by the delay.

In step S813, the CPU 101 executes the arithmetic operation module 304 deployed in the RAM 102. Then, the CPU 101 converts the size difference stored in the RAM 102 into an angular difference (the pan angle and tilt angle of the camera 100). For example, the CPU 101 approximately calculates an angle per 1% of the width of the captured image using information of the image capturing resolution and angle of view of image capturing of the camera 100, and calculates, as an angular difference, a result of multiplying the angle by the size difference. Then, the CPU 101 calculates a zoom speed as a speed in the zoom direction corresponding to the calculated angular difference. Letting $a$ be the calculated angular difference, $g\_3$ be the first speed coefficient, and $v\_3$ be the first offset zoom speed, the CPU 101 calculates the first zoom speed $z\_1$ in accordance with equation (3):

$$z\_1 = a \times g\_3 + v\_3 \qquad\qquad ...(3)$$

Fig. 9A shows a graph formed from the relationship between the size difference and the zoom speed. In the graph of Fig. 9A, the abscissa represents the size difference, and the ordinate represents the zoom speed. A straight line obtained by equation (3) above is a straight line 904, and the straight line 904 has such shape that the zoom speed increases in proportion to the size difference. A size difference 902 indicates the first dead zone of the zoom associated with the straight line 904 of equation (3) and the third threshold of the size difference. That is, in the subject embodiment example, the size difference 902 indicates both the first dead zone of the zoom and the third threshold of the size difference. The dead zone of the zoom indicates the range of the size difference within which the zoom speed is 0. That is, the CPU 101 outputs 0 as a zoom speed corresponding to the straight line 904 in a case where the size difference is smaller than the size difference 902.

Note that even for the same size difference, as the value of the first speed coefficient $g\_3$ is larger, the corresponding zoom speed is higher, and as the value of the first offset zoom speed $v\_3$ is smaller, the first dead zone is larger. The values of the first speed coefficient $g\_3$ and the first offset zoom speed $v\_3$ may be determined experimentally or may be arbitrarily set by the user by operating the controller 200.

Then, the CPU 101 generates a control command for causing the driving unit 109 to zoom in the zoom direction at the first zoom speed, and stores the generated control command in the RAM 102.

In step S814, the CPU 101 executes the arithmetic operation module 304 deployed in the RAM 102. Then, the CPU 101 calculates an angular difference (the pan angle and tilt angle of the camera 100) from the size difference stored in the RAM 102, similar to step S813. Then, the CPU 101 calculates a zoom speed corresponding to the calculated angular difference. Letting $a$ be the calculated angular difference, $g\_4$ be the second speed coefficient, and $v\_4$ be the second offset zoom speed, the CPU 101 calculates the second zoom speed $Z\_2$ in accordance with equation (4):

$$Z\_2 = a \times g\_4 + v\_4 \qquad\qquad ...(4)$$

In Fig. 9A, a straight line obtained by equation (4) above is a straight line 905, and the straight line 905 has such shape that the zoom speed increases in proportion to the size difference, similar to equation (3) above. A size difference 901 indicates the second dead zone associated with the straight line 905 of equation (4). The CPU 101 outputs 0 as a zoom speed corresponding to the straight line 905 in a case where the size difference is smaller than the size difference 901.

A zoom speed 903 in the graph shown in Fig. 9A indicates the fifth threshold of the speed.

Note that even for the same size difference, as the value of the second speed coefficient $g\_4$ is larger, the corresponding zoom speed is higher, and as the value of the second offset zoom speed $v\_4$ is smaller, the second dead zone is larger. The values of the second speed coefficient $g\_4$ and the second offset zoom speed $v\_4$ may be determined experimentally or may be arbitrarily set by the user by operating the controller 200. Note that the first speed coefficient $g\_3$, the second speed coefficient $g\_4$, the first offset zoom speed $v\_3$, and the second offset zoom speed $v\_4$ are determined so that, within the range of the size difference 901 (inclusive) to the size difference 902 (exclusive), a zoom speed corresponding to a distance difference X within the range on the straight line 905 of equation (4) is higher than a zoom speed corresponding to the distance difference X on the straight line 904 of equation (3). For example, these values are set to satisfy $g\_4 < g\_3$ and $v\_4 > v\_3$.

Then, the CPU 101 generates a control command for causing the driving unit 109 to zoom in the zoom direction at the second zoom speed, and stores the generated control command in the RAM 102.

In consideration of the above-described points, Fig. 9B shows the correspondence between the size difference and the zoom speed. In the subject embodiment example, the size difference 901 with which the tracking operation stops since the size difference from the target size to the object size is sufficiently small is set as the fourth threshold, and the size difference 902 with which it can be determined that the tracking object has moved since the size difference from the target size to the object size is large is set as the third threshold.

As shown in Fig. 9B, the straight line 904 is substantially a function of outputting 0 as the first zoom speed in a case where the size difference is smaller than the size difference 902, and outputting the first zoom speed calculated in accordance with equation (3) above in a case where the size difference is equal to or larger than the size difference 902. Furthermore, the straight line 905 is substantially a function of outputting 0 as the second zoom speed in a case where the size difference is smaller than the size difference 901, and outputting the second zoom speed calculated in accordance with equation (4) above in a case where the size difference is equal to or larger than the size difference 901 and smaller than the size difference 902.

Note that for a method of calculating a zoom speed in a case where the size difference is equal to or larger than the size difference 902, there is no restriction on which of equations (3) and (4) is used, but the subject embodiment example assumes that a zoom speed is calculated by equation (3). This is because with respect to the zoom speed in a case where the size difference is equal to or larger than the size difference 902, the result of equation (3) is larger than the result of equation (4), and it is thus easy to keep tracking even a high-speed tracking object.

Therefore, in the example shown in Fig. 9B, if the size difference is smaller than the size difference 901, the zoom speed is 0, and if the size difference is equal to or larger than the size difference 902, the zoom speed is the first zoom speed calculated by equation (3) above. If the size difference is "equal to or larger than the size difference 901 and smaller than size difference 902", a method of obtaining a zoom speed changes depending on whether the driving speed is equal to or higher than the fifth threshold or is lower than the fifth threshold.

If the driving speed is equal to or higher than the fifth threshold, the zoom speed is the first zoom speed calculated by equation (3) above (but is 0 by processing of the dead zone). On the other hand, if the driving speed is lower than the fifth threshold, the zoom speed is calculated as follows.

If the size difference changes from the state in which "the size difference is smaller than the size difference 901" to the state in which "the size difference is equal to or larger than the size difference 901 and smaller than the size difference 902", the zoom speed is the first zoom speed calculated by equation (3) above (but is 0 by processing of the dead zone).

If the size difference changes from the state in which "the size difference is equal to or larger than the size difference 902" to the state in which "the size difference is equal to or larger than the size difference 901 and smaller than the size difference 902", the zoom speed is the second zoom speed calculated by equation (4) above.

With the processes in steps S807 to S814, for example, a tracking operation is slowly started at the low zoom speed obtained by equation (3) at the start of the tracking operation. That is, tracking is started when the size difference exceeds the first dead zone. Next, during tracking, the zoom of the camera 100 is controlled so as to decrease the size difference, and as the size difference increases, the higher zoom speed given by equation (3) is obtained. Then, at the beginning of the stop of the tracking operation after the size difference exceeds the third threshold, the control method is switched, and the higher zoom speed given by equation (4) is obtained so as to further decrease the size difference. Therefore, it is easy to make the object size closer to the target size.

Note that the subject embodiment example has explained, as the method of calculating the control method, the method of obtaining the linear zoom speed given by equation (3) or (4) but the calculation method is not limited to this. For example, two types of quadratic curves having a relationship similar to equations (3) and (4) described above may be used to obtain a zoom speed. This allows the tracking operation to slowly start, and allows an operation of keeping tracking more easily if the size difference increases during tracking.

In step S815, the CPU 101 reads out the driving control module 303 from the storage device 103 to the RAM 102, deploys it in the RAM 102, and executes the deployed driving control module 303. Then, the CPU 101 derives, from the control command stored in the RAM 102, a driving parameter for performing a zoom operation at a desired zoom speed in the zoom direction. The driving parameter indicates a parameter for driving and controlling a motor (not shown) in the zoom direction included in the driving unit 109. Subsequently, the CPU 101 drives and controls the driving unit 109 via the driving I/F 108 based on the derived driving parameter. When the driving unit 109 is driven based on the driving parameter, the camera 100 changes the image capturing magnification (the zoom), that is, performs a zoom operation.

In step S816, the CPU 101 determines whether an end condition for ending tracking is satisfied, similar to step S415 described above. If the CPU 101 determines that the end condition is satisfied, it ends the processing according to the flowchart of Figs. 8A-1 and 8A-2. On the other hand, if the CPU 101 determines that the end condition is not satisfied, it returns the process to step S801.

Next, the operation of the controller 200 will be explained with reference to the flowchart shown in Fig. 8B.

In step S817, the CPU 201 reads out the user interface module 306 from the storage device 203 to the RAM 202, deploys it in the RAM 202, and executes the deployed user interface module 306. Then, the CPU 201 displays, on the display unit 206, the captured image received from the camera 100 and stored in the RAM 202. The CPU 201 executes the user interface module 306 deployed in the RAM 202. Then, the CPU 201 accepts a touch operation for "tracking object target size setting operation" by the user on the display unit 206.

For example, the user may touch a selection item (displayed on the display unit 206) of a predetermined target size such as a whole body, upper body, or bust shot with his/her finger, thereby setting the target size corresponding to the touched selection item. Alternatively, the user may input a numerical value as the target size.

Note that the method of setting the target size is not limited to a specific method. For example, the user may set the target size by operating the user input I/F 207. Then, the CPU 201 determines whether a touch operation for "tracking object target size setting operation" has been input.

If the CPU 201 determines that a touch operation for "tracking object target size setting operation" has been input, it stores, in the RAM 202, the target size set by the touch operation, and shifts the process to step S818. On the other hand, if the CPU 201 determines that a touch operation for "tracking object target size setting operation" has not been input, it returns the process to step S817.

In step S818, the CPU 201 reads out the communication module 309 from the storage device 203 to the RAM 202, deploys it in the RAM 202, and executes the communication module 309. Then, the CPU 201 transmits the new target size stored in the RAM 202 to the camera 100 via the network I/F 205.

As described above, by determining, based on the size difference between the target size and the object size, whether the tracking object has moved, and switching the control operation, it is possible to easily make the object size closer to the target size in a case where the tracking object has moved.

That is, in the subject embodiment example, in a configuration of calculating a control speed for controlling the zoom of an image capturing device so that the detection size of an object detected from an image captured by the image capturing device becomes closer to the target size of the object in the captured image, an example of the image capturing device of calculating, in a state in which the difference between the detection size and the target size is equal to or larger than the first threshold, the first control speed as the control speed of the zoom in accordance with the difference, and calculating, in a case where the difference becomes smaller than the first threshold and equal to or larger than the second threshold smaller than the first threshold after the above state, as the control speed of the zoom, the second control speed higher than the first control speed in accordance with the difference has been explained.

Note that in a case where the difference becomes smaller than the first threshold and equal to or larger than the second threshold after the state in which the difference is smaller than the second threshold, the first control speed may be calculated as the control speed of the zoom in accordance with the difference.

In the subject embodiment example as well, the controller 200 may execute part or all of calculation of a driving amount for detecting and tracking an object. In this case, first, the camera 100 transmits a captured image to the controller 200. The controller 200 detects a tracking object from the received captured image, calculates a driving parameter for tracking the tracking object, as described above, and transmits the driving parameter to the camera 100. Then, the camera 100 tracks the tracking object and captures an image of the tracking object, as described above, in accordance with the received driving parameter.

The processing for calculating the control speed (angular velocity or zoom speed), which has been described in one or more of the above-described embodiments, may be executed by the camera 100 or the controller 200, or may be executed by a device separated from these devices. That is, the arithmetic device that executes the processing for calculating the control speed (angular velocity or zoom speed) may be incorporated in the camera 100 or the controller 200, or may exist as a device separated from these devices. The arithmetic device may be implemented by hardware, software, or a combination thereof.

For example, it may be configured to stop the zoom of the camera 100 by threshold determination of the distance difference, and stop the pan/tilt of the camera 100 by threshold determination of the size difference. This can simultaneously operate the pan, tilt, and zoom of the camera 100, thereby improving the video quality.

The numerical values, processing timings, processing order, processing entity, data (information) structure/obtaining method/transmission destination/transmission source/storage location, and the like used in each of the above-described embodiments are merely examples for concrete descriptions, and it is not intended to limit the scope and the features of present disclosure to such examples.

Furthermore, part or all of the above-described embodiments may be appropriately combined and used. Part or all of the above-described embodiments may be selectively used.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU), etc.) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While one or more features of the present disclosure have been described with reference to exemplary embodiments, it is to be understood that the scope of the present disclosure is not limited to the disclosed exemplary embodiments. The scope of the following claims is to be accorded the broadest interpretation so as to encompass all such modifications and equivalent structures and functions.

**Claims**

1.   An arithmetic device **characterized by** comprising:

   calculation means for calculating a control speed for controlling a posture of an image capturing device so that a detection position of an object detected from an image captured by the image capturing device becomes closer to a target position of the object in the captured image,
   **characterized in that**, in a state in which a difference between the detection position and the target position is not smaller than a first threshold, the calculation means calculates a first control speed as the control speed of the posture in accordance with the difference, and, in a case where the difference becomes smaller than the first threshold and not smaller than a second threshold smaller than the first threshold after the state, the calculation means calculates, as the control speed of the posture, a second control speed higher than the first control speed in accordance with the difference.

2.   The device according to claim 1, **characterized in that**, in a case where the difference is smaller than the second threshold, the calculation means sets the control speed of the posture to 0.

3.   The device according to claim 1, **characterized in that**, in a case where the difference becomes smaller than the first threshold and not smaller than the second threshold after a state in which the difference is smaller than the second threshold, the calculation means calculates the first control speed as the control speed of the posture in accordance with the difference.

4.   The device according to claim 1, **characterized in that**, in a case where the control speed of the posture of the image capturing device is smaller than a threshold, in a state in which the difference is not smaller than the first threshold, the calculation means calculates the first control speed as the control speed of the posture in accordance with the difference, and, in a case where the difference becomes smaller than the first threshold and not smaller than the second threshold after the state, the calculation means calculates the second control speed as the control speed of the posture in accordance with the difference.

5.   The device according to claim 1, **characterized in that**, in a case where the control speed of the posture of the image capturing device is not smaller than a threshold, the calculation means calculates the first control speed as the control speed of the posture in accordance with the difference.

6.   The device according to claim 1, **characterized in that**, in a case where the difference becomes smaller than the first threshold and not smaller than the second threshold after a state in which the difference is smaller than the second threshold, the calculation means sets the control speed of the posture to 0.

7.   An arithmetic device **characterized by** comprising:

   calculation means for calculating a control speed for controlling zoom of an image capturing device so that a detection size of an object detected from an image captured by the image capturing device becomes closer to a target size of the object in the captured image,
   **characterized in that**, in a state in which a difference between the detection size and the target size is not smaller than a first threshold, the calculation means calculates a first control speed as the control speed of the zoom in accordance with the difference, and, in a case where the difference becomes smaller than the first threshold and not smaller than a second threshold smaller than the first threshold after the state, the calculation means calculates, as the control speed of the zoom, a second control speed higher than the first control speed in accordance with the difference.

8. The device according to claim 7, **characterized in that**, in a case where the control speed of the zoom of the image capturing device is smaller than a threshold, in a state in which the difference is not smaller than the first threshold, the calculation means calculates the first control speed as the control speed of the zoom in accordance with the difference, and, in a case where the difference becomes smaller than the first threshold and not smaller than the second threshold after the state, the calculation means calculates the second control speed as the control speed of the zoom in accordance with the difference.

9. The device according to claim 7, **characterized in that**, in a case where the control speed of the zoom of the image capturing device is not smaller than a threshold, the calculation means calculates the first control speed as the control speed of the zoom in accordance with the difference.

10. The device according to claim 7, **characterized in that**, in a case where the difference is smaller than the second threshold, the calculation means sets the control speed of the zoom to 0.

11. The device according to claim 7, **characterized in that**, in a case where the difference becomes smaller than the first threshold and not smaller than the second threshold after a state in which the difference is smaller than the second threshold, the calculation means sets the control speed of the zoom to 0.

12. The device according to claim 1, **characterized by** further comprising:
control means for controlling the posture in accordance with the control speed of the posture calculated by the calculation means.

13. The device according to claim 1, **characterized by** further comprising:
transmission means for transmitting the control speed of the posture calculated by the calculation means to the image capturing device.

14. The device according to claim 7, **characterized by** further comprising:
control means for controlling the zoom in accordance with the control speed of the zoom calculated by the calculation means.

15. The device according to claim 7, **characterized by** further comprising:
transmission means for transmitting the control speed of the zoom calculated by the calculation means to the image capturing device.

16. The device according to claim 7, **characterized in that**, in a case where the difference becomes smaller than the first threshold and not smaller than the second threshold after a state in which the difference is smaller than the second threshold, the calculation means calculates the first control speed as the control speed of the zoom in accordance with the difference.

17. An arithmetic method executed by an arithmetic device, **characterized by** comprising:

calculating a control speed for controlling a posture of an image capturing device so that a detection position of an object detected from an image captured by the image capturing device becomes closer to a target position of the object in the captured image,
wherein in the calculating, in a state in which a difference between the detection position and the target position is not smaller than a first threshold, a first control speed is calculated as the control speed of the posture in accordance with the difference, and, in a case where the difference becomes smaller than the first threshold and not smaller than a second threshold smaller than the first threshold after the state, a second control speed higher than the first control speed is calculated as the control speed of the posture in accordance with the difference.

18. An arithmetic method executed by an arithmetic device, **characterized by** comprising:

calculating a control speed for controlling zoom of an image capturing device so that a detection size of an object detected from an image captured by the image capturing device becomes closer to a target size of the object in the captured image,

wherein in the calculating, in a state in which a difference between the detection size and the target size is not smaller than a first threshold, a first control speed is calculated as the control speed of the zoom in accordance with the difference, and, in a case where the difference becomes smaller than the first threshold and not smaller than a second threshold smaller than the first threshold after the state, a second control speed higher than the first control speed is calculated as the control speed of the zoom in accordance with the difference.

19. A computer-readable storage medium storing a computer program for causing a computer to perform a method, the method **characterized by** comprising:

calculating a control speed for controlling a posture of an image capturing device so that a detection position of an object detected from an image captured by the image capturing device becomes closer to a target position of the object in the captured image,

wherein in the calculating, in a state in which a difference between the detection position and the target position is not smaller than a first threshold, a first control speed is calculated as the control speed of the posture in accordance with the difference, and, in a case where the difference becomes smaller than the first threshold and not smaller than a second threshold smaller than the first threshold after the state, a second control speed higher than the first control speed is calculated as the control speed of the posture in accordance with the difference.

20. A computer-readable storage medium storing a computer program for causing a computer perform a method, the method **characterized by** comprising:

calculating a control speed for controlling zoom of an image capturing device so that a detection size of an object detected from an image captured by the image capturing device becomes closer to a target size of the object in the captured image,

wherein in the calculating, in a state in which a difference between the detection size and the target size is not smaller than a first threshold, a first control speed is calculated as the control speed of the zoom in accordance with the difference, and, in a case where the difference becomes smaller than the first threshold and not smaller than a second threshold smaller than the first threshold after the state, a second control speed higher than the first control speed is calculated as the control speed of the zoom in accordance with the difference.

# F I G. 1

# F I G. 2

EP 4 601 311 A1

# FIG. 3

100

| IMAGE CAPTURING MODULE | 301 |
| INFERENCE MODULE | 302 |
| DRIVING CONTROL MODULE | 303 |
| ARITHMETIC OPERATION MODULE | 304 |
| COMMUNICATION MODULE | 305 |

200

| USER INTERFACE MODULE | 306 |
| INFERENCE MODULE | 307 |
| ARITHMETIC OPERATION MODULE | 308 |
| COMMUNICATION MODULE | 309 |

FIG. 4A

START

OBTAIN CAPTURED IMAGE — S401

TRANSMIT CAPTURED IMAGE — S402

S403
HAS TARGET POSITION BEEN RECEIVED? — NO

YES  S404

UPDATE TARGET POSITION

DETECT TRACKING OBJECT FROM CAPTURED IMAGE — S405

CALCULATE DISTANCE DIFFERENCE FROM TARGET POSITION TO TRACKING OBJECT POSITION — S406

S407
IS DISTANCE DIFFERENCE SMALLER THAN SECOND THRESHOLD? — YES  S410

SET VALUE OF THRESHOLD EXCEEDED FLAG TO OFF

NO

S408
IS DISTANCE DIFFERENCE SMALLER THAN THE FIRST THRESHOLD? — NO  S409

SET VALUE OF THRESHOLD EXCEEDED FLAG TO ON

YES  S411

IS THRESHOLD EXCEEDED FLAG ON? — NO

S413  YES

CALCULATE CONTROL COMMAND BASED ON SECOND SPEED COEFFICIENT

S412
CALCULATE CONTROL COMMAND BASED ON FIRST SPEED COEFFICIENT

DRIVE ACCORDING TO CONTROL COMMAND — S414

NO
S415
END TRACKING?

YES

END

21

# F I G. 4B

START

S416

HAS
CAPTURED IMAGE BEEN
RECEIVED?

NO

YES  S417

DISPLAY CAPTURED IMAGE

S418

HAS
TARGET POSITION BEEN
SET?

NO

YES  S419

TRANSMIT TARGET POSITION

END

# FIG. 5A

# FIG. 5B

# FIG. 6A

# FIG. 6B

# FIG. 7A

100

| 101 | 102 | 103 | 104 |
|---|---|---|---|
| CPU | RAM | ROM | INFERENCE UNIT |

110

| 701 | 108 | 107 | 106 | 105 |
|---|---|---|---|---|
| SPEED SENSOR | DRIVING I/F | IMAGE SENSOR | IMAGE PROCESSING UNIT | NETWORK I/F |

109
DRIVING UNIT

# FIG. 7B

100

IMAGE CAPTURING MODULE — 301

INFERENCE MODULE — 302

MEASUREMENT MODULE — 702

DRIVING CONTROL MODULE — 303

ARITHMETIC OPERATION MODULE — 304

COMMUNICATION MODULE — 305

# F I G. 8A-1

```
                          ( START )

    ( 1 )──────────────────────┐
                               ▼
        ┌──────────────────────────────────────┐
        │      OBTAIN CAPTURED IMAGE            │───~ S801
        └──────────────────────────────────────┘
                               │
                               ▼         ~S802
                          ╱          ╲
                        ╱   HAS         ╲      NO
                      ╱  TARGET SIZE BEEN  ╲─────────────┐
                        ╲   RECEIVED?     ╱              │
                          ╲            ╱                 │
                               │ YES                     │
                               ▼                         │
        ┌──────────────────────────────────────┐        │
        │         UPDATE TARGET SIZE           │───~ S803 │
        └──────────────────────────────────────┘        │
                               │◄───────────────────────┘
                               ▼
        ┌──────────────────────────────────────┐
        │   DETECT TRACKING OBJECT FROM        │───~ S804
        │         CAPTURED IMAGE               │
        └──────────────────────────────────────┘
                               │
                               ▼
        ┌──────────────────────────────────────┐
        │  CALCULATE SIZE DIFFERENCE BETWEEN   │───~ S805
        │ TARGET SIZE AND SIZE OF TRACKING OBJECT │
        └──────────────────────────────────────┘
                               │
                               ▼
        ┌──────────────────────────────────────┐
        │      MEASURE SPEED OF DRIVING UNIT   │───~ S806
        └──────────────────────────────────────┘
                               │
                               ▼         ~S807
                          ╱          ╲
                        ╱   IS SIZE     ╲      YES
             DIFFERENCE SMALLER THAN FOURTH ────────( 3 )
                        ╲  THRESHOLD?    ╱
                          ╲            ╱
                               │ NO
                               ▼
                             ( 2 )
```

# F I G. 8A-2

③ ⟶ **S811**
SET VALUE OF THRESHOLD
EXCEEDED FLAG TO OFF

②

**S808**
IS
SPEED SMALLER THAN FIFTH
THRESHOLD? — NO ⟶

YES **S809**

IS SIZE
DIFFERENCE SMALLER THAN THIRD
THRESHOLD? — NO ⟶ **S810**
SET VALUE OF THRESHOLD
EXCEEDED FLAG TO ON

YES **S812**

IS
THRESHOLD EXCEEDED FLAG
ON? — NO ⟶

YES **S814**

CALCULATE CONTROL
COMMAND BASED ON
SECOND SPEED COEFFICIENT

**S813**
CALCULATE CONTROL
COMMAND BASED ON
FIRST SPEED COEFFICIENT

DRIVE ACCORDINGLY
CONTROL COMMAND — **S815**

**S816**
① ⟵ NO — END TRACKING?

YES

END

# F I G. 8B

START

**S817**
NO ⟵ HAS TARGET
SIZE BEEN SET?

YES **S818**

TRANSMIT TARGET SIZE

END

# F I G. 9A

# F I G. 9B

Europäisches
Patentamt

European
Patent Office

Office européen
des brevets

# EUROPEAN SEARCH REPORT

**Application Number**

EP 25 15 6188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/026907 A1 (PENG YU [CN] ET AL) 27 January 2022 (2022-01-27) * paragraph [0017] - paragraph [0024]; figures 2-4 * * paragraph [0040] - paragraph [0051]; figure 7 * | 1-20 | INV. H04N23/69 H04N23/695 |
| X | CN 115 167 532 A (ZHEJIANG DAHUA TECHNOLOGY CO) 11 October 2022 (2022-10-11) | 1-6,12, 13,17,19 | |
| A | * paragraph [0043] - paragraph [0086]; figures 1,7 * | 7-11, 14-16, 18,20 | |
| A | US 2011/149072 A1 (MCCORMACK KENNETH [US]) 23 June 2011 (2011-06-23) * paragraph [0051] - paragraph [0073]; figure 4 * | 1-20 | |
| A | US 2022/245827 A1 (CHEN MINGZHU [CN] ET AL) 4 August 2022 (2022-08-04) * paragraph [0141] - paragraph [0169]; figures 9-11 * | 1-20 | **TECHNICAL FIELDS SEARCHED (IPC)** H04N |

The present search report has been drawn up for all claims

| Place of search | Date of completion of the search | Examiner |
|---|---|---|
| Munich | 26 May 2025 | Bakstein, Hynek |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 6188

26-05-2025

| Patent document cited in search report | | Publication date | Patent family member(s) | | Publication date |
|---|---|---|---|---|---|
| US 2022026907 | A1 | 27-01-2022 | CN | 110401799 A | 01-11-2019 |
| | | | US | 2022026907 A1 | 27-01-2022 |
| | | | WO | 2021022580 A1 | 11-02-2021 |
| CN 115167532 | A | 11-10-2022 | NONE | | |
| US 2011149072 | A1 | 23-06-2011 | NONE | | |
| US 2022245827 | A1 | 04-08-2022 | CN | 111198561 A | 26-05-2020 |
| | | | EP | 4034958 A1 | 03-08-2022 |
| | | | US | 2022245827 A1 | 04-08-2022 |
| | | | WO | 2021109789 A1 | 10-06-2021 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019068183 A